Europäisches Patentamt

European Patent Office

Office européen des brevets

(19)

(11) Publication number: **0 200 314**
**A2**

# EUROPEAN PATENT APPLICATION

(12)

(21) Application number: **86301841.2**

(22) Date of filing: **13.03.86**

(51) Int. Cl.⁴: **G05D 13/62**

(30) Priority: **01.04.85 US 718292**

(43) Date of publication of application:
**10.12.86 Bulletin 86/45**

(84) Designated Contracting States:
**AT BE CH DE FR GB IT LI LU NL SE**

(71) Applicant: **CEMTRONICS, INC.**
**1114 Fifth Street, N.W.**
**Washington D.C. 20001(US)**

(72) Inventor: **Trounson, James E.**
**1114 Fifth Street, N.W.**
**Washington, D.C. 20001(US)**
Inventor: **Rogers, Albert J.**
**420 North Irving**
**Arlington Virginia 22201(US)**
Inventor: **Smith, Michael E.**
**8004 Treasure Tree Court**
**Springfield Virginia 22153(US)**

(74) Representative: **Haggart, John Pawson et al**
**Page, White & Farrer 5 Plough Place New**
**Fetter Lane**
**London EC4A 1HY(GB)**

(54) **Electric motor control system.**

(57) A digital motor control system includes a feedback element (32) attached to a motor (34) which periodically obtains information descriptive of actual motor position and velocity, compares this information with desired values for position and velocity to determine a system vector which defines both position error and velocity error as a single point on a cartesian coordinate error plane, compares this vector to a decision-making criterion represented as a continuous function on the error plane, and as a result of the comparison causes a voltage pulse of appropriate duration and polarity to be applied to the motor (34). A pulse of a first preselected width is applied to accelerate the motor (34) if the system vector is located on one side of the function, or a pulse of a difference width and/or polarity is applied to cause the motor to decelerate if the system vector is on the other side of the return function.

Electric motor control system

The present invention is directed to servo control systems, and more particularly to a system for digitally obtaining accurate and frequent feedback information and using non-linear multi-variable criteria to determine one or more characteristics of a force that is applied to a controlled element of the servo system to regulate its position, velocity and rate of acceleration over its entire performance range. In a preferred embodiment, the invention is directed to a servo system for controlling an electric motor.

Heretofore, practical control systems for electric motors have operated on the principle of proportional control. In these systems, the magnitude of an error correcting feedback response to any detected deviation from a desired operating parameter is proportional to the magnitude of the detected deviation for that parameter. The proportionality between the magnitude of the detected error and the associated error correcting response is generally adjustable and is termed "gain". Error signals representing position error, velocity error, acceleration error, and other system errors are used in various combinations in such control systems. Multiple error signals are combined by algebraically summing their respective individual proportional responses by use of analog circuitry. The values chosen for system gains dictate system response characteristics and may interact with each other and the physics of the system in ways which require highly sophisticated analysis to predict. Mathematically, the net response to a combination of errors is the sum of the linear functions of single variables. Such control schemes fall into the overall category of linear control systems.

While control systems of this type are in widespread use, they suffer from several shortcomings. By the nature of linear analog systems, optimal performance can be expected within some range of operating conditions, but can be expected to deteriorate toward instability outside this range. A designer is generally faced with a tradeoff between stability and rapid dynamic response. Being analog in nature, these systems also tend to drift out of adjustment with temperature, age, and vibration or be forced out by unskilled operators adjusting the gain. Compensation for drift and/or greater precision requires expensive precision components and complicated compensation circuitry.

Digital control in the context of existing linear control systems has usually been limited to digitally storing and retrieving the desired path of motion to be followed by the otherwise analog feedback circuitry. In fact, production of a desired path signal is a difficult burden for many computerized numerical control systems. This signal consists of a physical pulse train which is matched pulse for pulse with encoder pulses by the analog control system. Other digital systems have been built which employ dynamic microprocessor control over gain. However, these systems require all of the analog components of any other analog linear system plus digital "tuning" circuitry and software which can handle the interrelationships between gains.

Another limitation associated with many servo control systems which employ feedback, particularly motor control systems, is their inability to function effectively at very low rotational speeds, including zero. Typically, the feedback information about motor velocity and/or position is obtained by means of an encoder that generates a pulse for each incremental unit of rotation of the motor. Velocity may be obtained by timing the interval between pulses. It will be appreciated that as the motor speed approaches zero, the pulse frequency also drops, with the result that time delays are imposed on the feedback information. These time delays tend to seriously degrade performance at low speed. In the extreme case of zero velocity, no encoder pulses are available, and if the motor should jitter (oscillate about a nominal angular position), pulses which falsely indicate motor motion could be generated.

Various approaches at alleviating this slow speed problem operate by effectively increasing the number of pulses per revolution. However, increasing the number of lines on an optical encoder complicates the optics which must read the lines and also limits the maximum speed of the motor due to the limited frequency response of sensors. Attempts to resolve the position of the encoder to a fraction of a line have, to date, relied on the analog nature of the light signal which is produced as the encoder lines move past a mask. In theory, the varying intensity of this light should correspond to predictable fractional line position increments. In practice it is very difficult to produce a predictable light pattern, and more difficult to build balanced, drift-free circuits to accurately divide such a pattern into many equal parts, each of which produces a pulse. In addition, two such light patterns and circuits are always needed in order to distinguish direction and eliminate false signals from jitter at very slow speeds. The output from these two circuits must be fed to an additional "anti-jitter" circuit. While such approaches extend the useful range of servo operation, they do so at rapidly increasing cost and with added layers of complexity.

As an alternative to pulse-generating encoders, analog tachometers can be employed to measure rotational velocities. However, these devices are also not without attendant limitations, particularly at low speeds. For example, each commutation of the tachometer armature creates a large voltage transient which must be filtered in order to obtain accurate system response. In order to accurately measure low rotational speeds, the pass band for the filter must have a relatively low upper limit. However, good resolution of high acceleration rates requires the ability to detect high frequency signals. Accordingly, the system designer is faced with a compromise between the low-speed cutoff point and the resolution with which high acceleration rates can be tracked.

Accordingly, it is a general object of the present invention to provide a novel servo control system that is capable of defining desired motion and regulating the position, velocity and acceleration of a controlled element of the system to follow the desired motion with a high degree of precision while avoiding complexity and high cost.

It is another object of the present invention to provide an all-digital approach to the control of electric motors using a single, multi-variable, software-controlled feedback loop that is free of drift and the need for user adjustment.

It is a further object of the invention to provide a novel servo control system which unambiguously changes the sign of the time derivative of the parameter over which control is being exercised based on a selective criteria which is a function of two or more variables.

It is yet another object of the present invention to provide a novel servo control system which, as a first-order correction response, selects one of a limited number of power levels to control the duration and/or polarity of power pulses that are applied to the motor to provide optimum response without instability.

It is yet a further object of the invention to provide a second-order response which optimizes the first-order response for the particular operating conditions by dynamically modifying the power levels which can be selected.

It is still another object of the invention to provide a servo control system that is capable of exercising control with essentially zero position following error up to very nearly the maximum physical limits of acceleration and velocity available with the controlled element.

It is still a further object of the invention to obtain frequent, accurate and unambiguous measurements of the position and velocity of a controlled element over its entire operating range including at or near zero velocity.

It is another object of the present invention to provide a novel feedback element which indicates the position and velocity of a movable member with a resolution that is significantly better than that obtainable with conventional encoders.

It is a further object along these lines to provide a practical and reliable feedback element having no mechanically wearing parts such as brushes.

It is another object of the invention to provide a feeback element which supplies feedback information in a form which is readily useable by a digital feedback control system.

In accordance with the present invention, these and other objects are accomplished in a digital system which periodically obtains information descriptive of actual position and velocity of the controlled element, e.g. motor, of the servo system, compares this information with desired values for position and velocity to determine a system vector which defines both position error and velocity error as a single point on a cartesian coordinate error plane, compares this vector to a decision-making criterion represented as a continuous function on the error plane, and as a result of the comparison causes an appropriate force, e.g. a voltage pulse of predetermined duration and polarity, to be applied to the controlled element. In a preferred embodiment, the continuous function is parabolic in shape, defined by portions of the two curves represented as $VE^2 = 2dPE$ and $VE^2 = 2aPE$ where "VE" is velocity error, "PE" is position error, "d" represents the amount of available deceleration (minus the deceleration desired by the path being followed) and "a" represents the available acceleration (minus the acceleration desired by the path being followed) that can be produced by the controlled element. This parabolic function is referred to as a return function since it is representative of the path the system must follow if it is to return to the origin of the error plane. In practice a plurality of curves can be employed to define multiple functions, with each curve being used for a specified range of available acceleration and deceleration rates.

When an electric motor is the controlled element, it can be controlled by applying a voltage pulse of a first preselected width so as to accelerate the motor if the representation of the actual state of the system is located on one side of the return function or a pulse of a different width and/or polarity to cause the motor to decelerate if the actual state of the system is on the other side of the return function. This first-order control criterion is utilized regardless of which quadrant of the Cartesian coordinate plot is occupied by the vector representing the state of the system. Consequently, the present invention is able to optimally resolve the dilemma presented by prior motor control systems, namely how and when to apply power to the motor when, for example, there is a lagging position error, but the motor is already rotating too quickly. In this instance, if the actual state of the system is below the return function, the system will accelerate the motor until the representation of the actual system state crosses the function, at which time the system is caused to decelerate until the return function is crossed once again. This process is repeated continuously at known intervals of time, called control cycles, as the system reduces and eliminates errors introduced by changing external conditions and changing demands on the path of motion to be followed by the motor.

It should be noted that the terms "accelerate" and "decelerate" in the above context imply a control situation requiring constant velocity, i.e., zero acceleration. In the event of some desired acceleration being required of the system, then "accelerate" and "decelerate" would be taken to mean "increase acceleration" and "decrease acceleration" respectively. Though reference is to the zero acceleration case herein, substantial desired acceleration rates are accomodated without modification to the descriptions which follow and such cases are meant to be included therein.

As a second-order response, the system attempts to balance its response such that the time spent above and below the return function is approximately equal. In this condition the system can respond equally well to unexpected torque changes in either direction. The second order response works by modifying the pulse widths, once per control cycle, from which the first-order response is chosen. It is possible to tailor the second order response to match known system characteristics. For example if large, rapid torque changes only occur in one direction, the second-order response can be made to slightly unbalance the time spent above and below the return function so that greater error handling ability is available in one direction than the other. Another example is to impose a bias upon changes to the pulse widths, once per control cycle, in order to approximately track changes in the power level required due to an anticipated acceleration or deceleration.

As another feature of the invention, feedback information representative of the actual state of the motor is obtained periodically from a feedback element that is herein referred to as a "Time Vernier". The Time Vernier produces three separate pulse trains which are used in various combinations to extract the required feedback information. The first pulse train is an absolute pulse train, the same as that produced by a conventional optical encoder coupled to the motor being monitored. The second pulse train is an approximately constant frequency reference pulse train generated from an encoder disk attached to a small, approximately constant speed reference motor. The third pulse train is a frequency shifted vernier pulse train having a frequency which is the algebraic sum of the absolute pulse train and the reference pulse train frequencies.

In operation, position and velocity information are extracted from the absolute pulse train at high system operating speeds and from a combination of the reference and vernier pulse trains at low and zero operating speeds. Position information to a small fraction of a physical encoder line and very fine resolution of velocity is possible by a combination of digital counting and timing techniques. The frequency at which new information can be obtained is limited only by the frequency of the reference pulse train, which can be arbitrarily fast, rather than the frequency of the absolute pulse train which is tied to the motor being controlled.

Further features of the invention are explained in greater detail hereinafter with specific reference to preferred embodiments thereof illustrated in the accompanying drawings.

Fig. 1 is a graphical illustration of an error plane and plotted error curves.

Fig. 2 is a graphical illustration of a return function on the error plane.

Fig. 3 is a flow chart depicting exemplary steps in the motor control system of the invention.

Figs. 4a and 4b illustrate a vernier type encoder using three optical encoders according to a further aspect of the invention.

Fig. 5 is a pulse train diagram illustrating the manner in which fractional resolution of the reference and vernier pulses can be obtained.

Fig. 6 is a schematic representation of the manner in which desired position and velocity values are computed.

Figs. 7a and 7b are voltage and current graphs illustrating the response characteristics of pulse width modulated and digital pulsed voltage systems, respectively.

Fig. 8 is a graphical illustration of the sequence of steps in which motor position and velocity are returned to the origin on the error plane.

Fig. 9 is a more detailed graph similar to Fig. 8 and illustrating the control operation with the use of center pulses.

Fig. 10 is a comprehensive flow chart of the operation of the motor control system.

Fig. 11 is a block diagram of an embodiment of a motor control system incorporating the present invention.

Fig. 12 is a schematic diagram of a power transistor circuit.

Fig. 13 illustrates schematically the energization of the optically isolated latches of Fig. 12.

Fig. 14 is a schematic illustration of a break-before-make circuit.

In the following description of preferred embodiments of the invention, particular reference is made to the control of an electric motor through the regulation of voltage pulses that are applied to the motor. However, it will be appreciated by those of ordinary skill in the art that the practical implementations of the invention are not limited to this specific example. For instance, the basic concepts which underly the invention are applicable to other types of servo systems, such as those which might use magnetic, hydraulic, combustion or pneumatic power as the motive force in the system.

Basic System Concepts

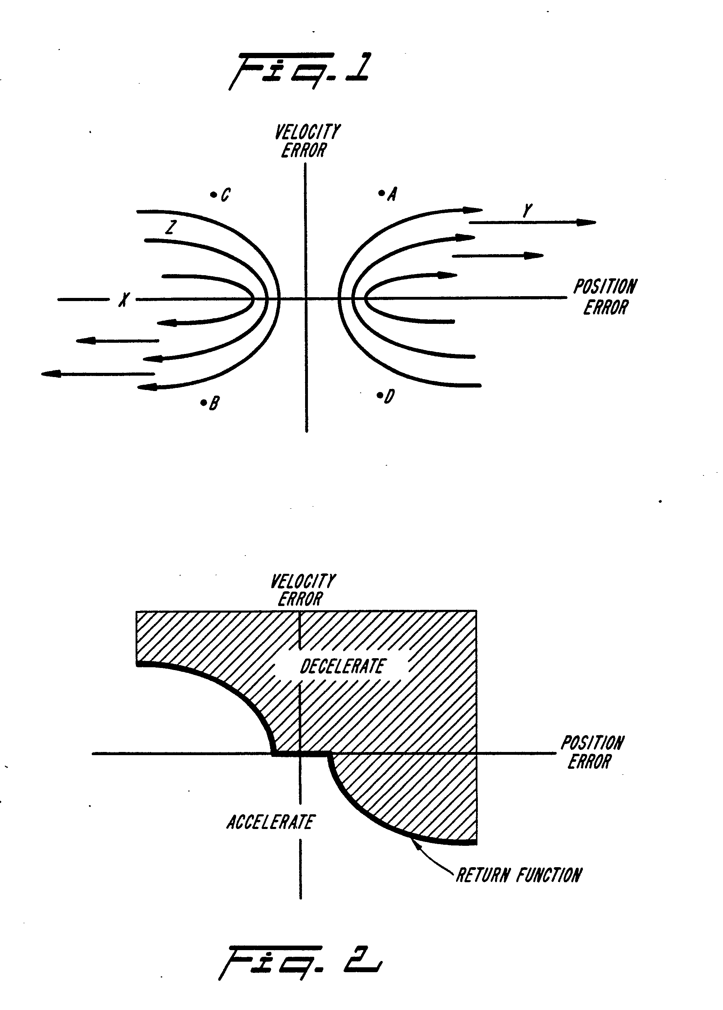

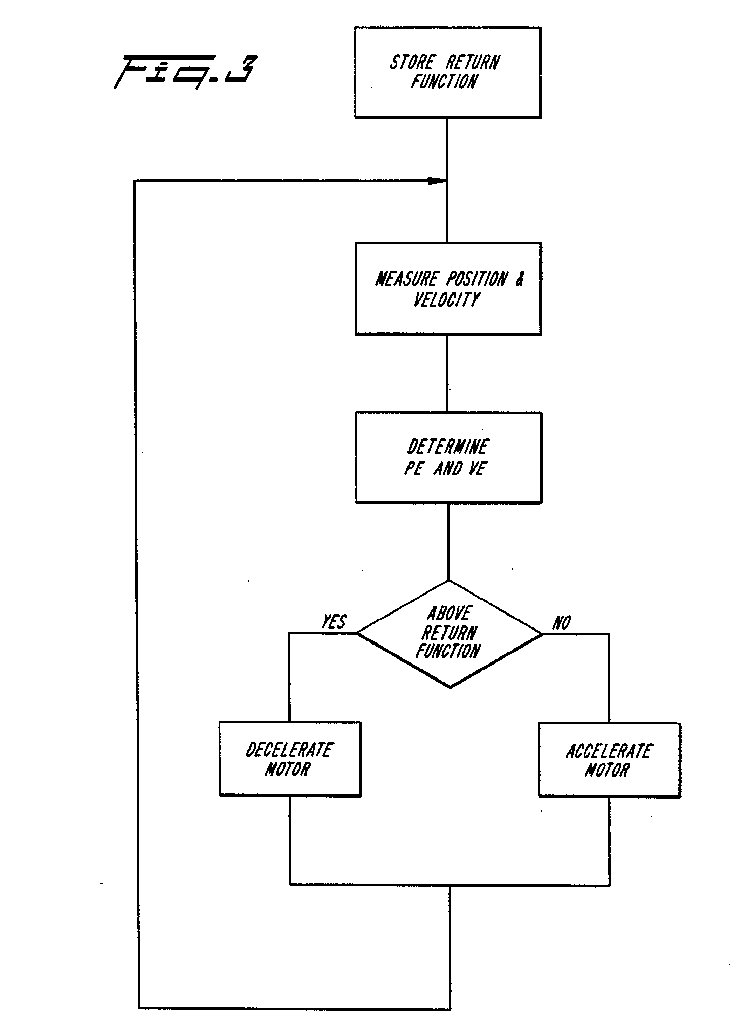

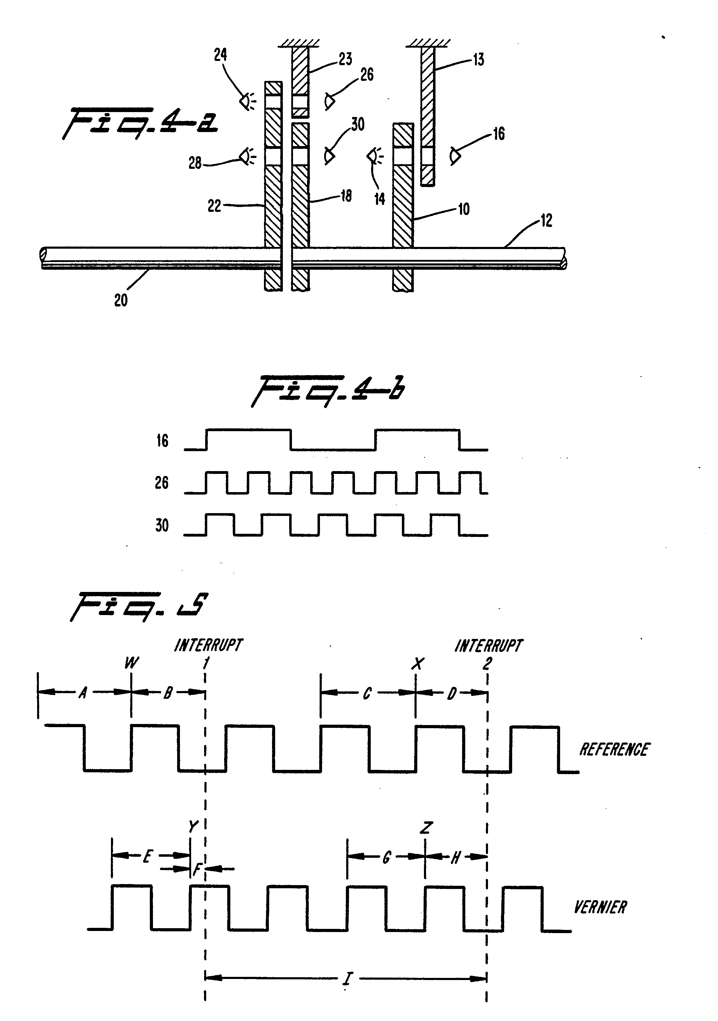

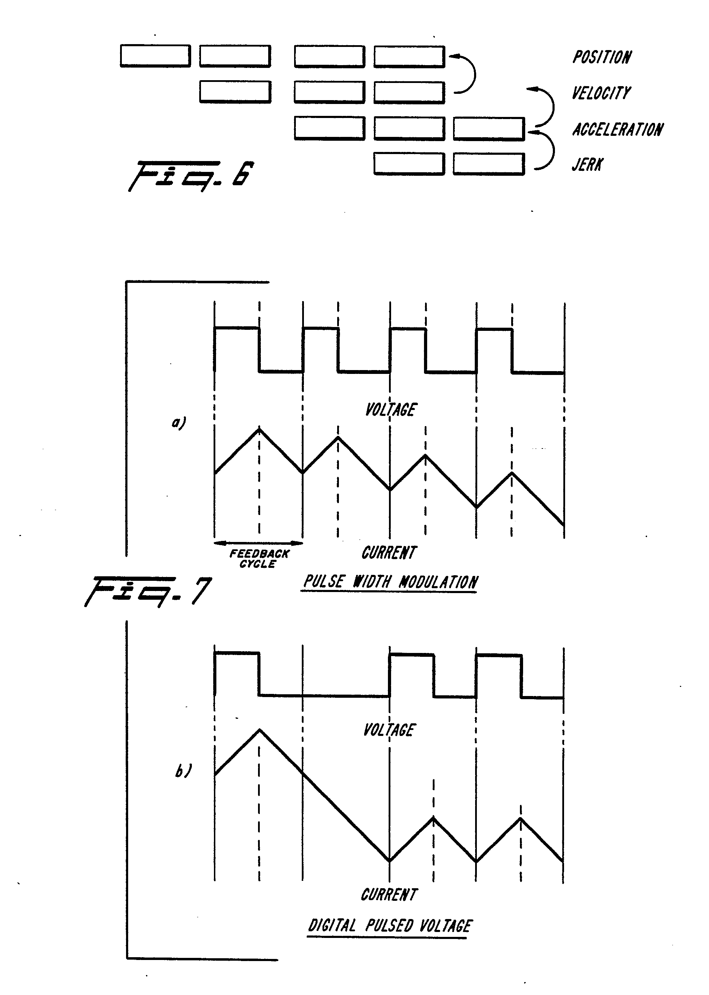

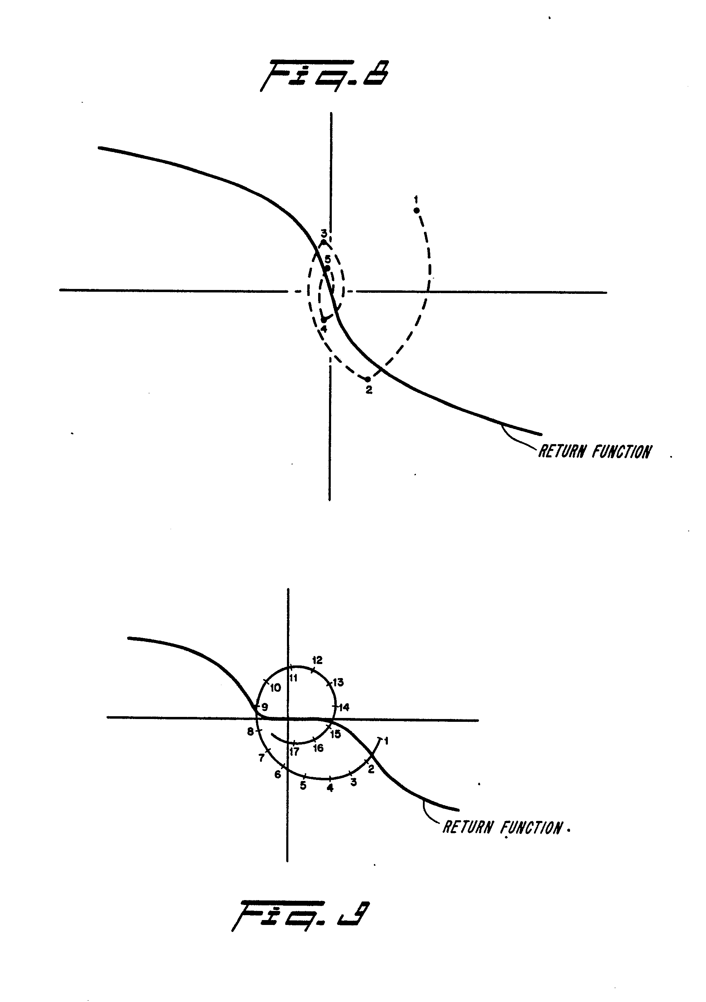

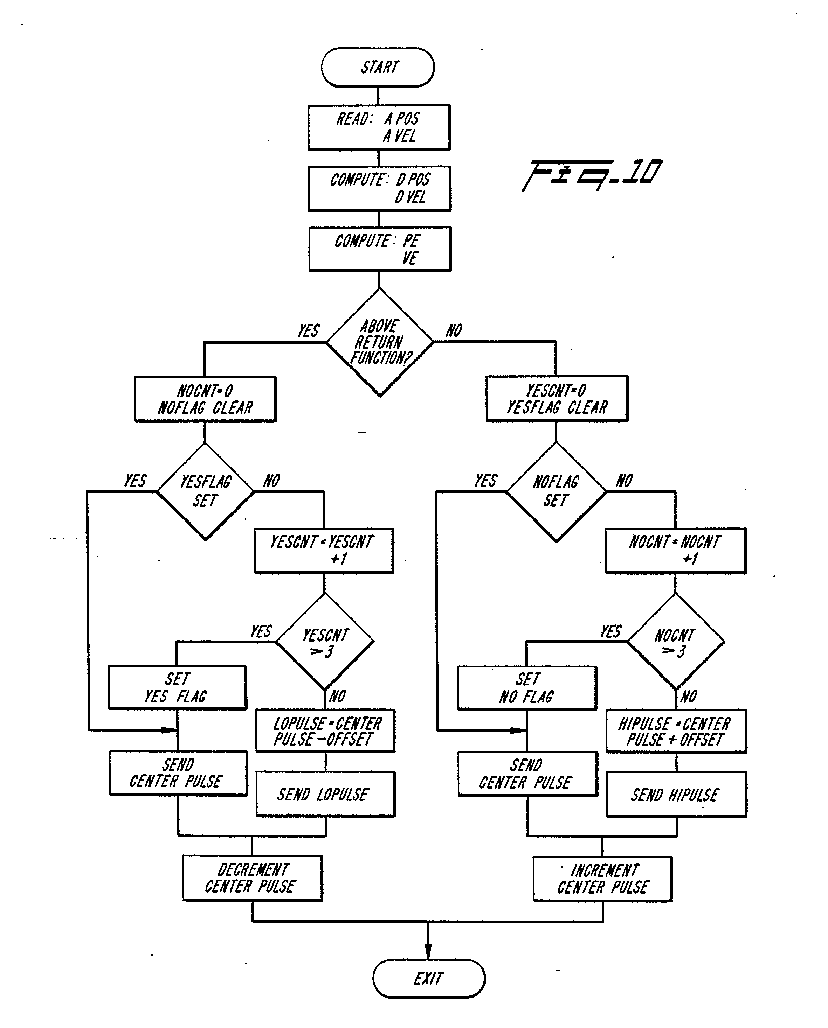

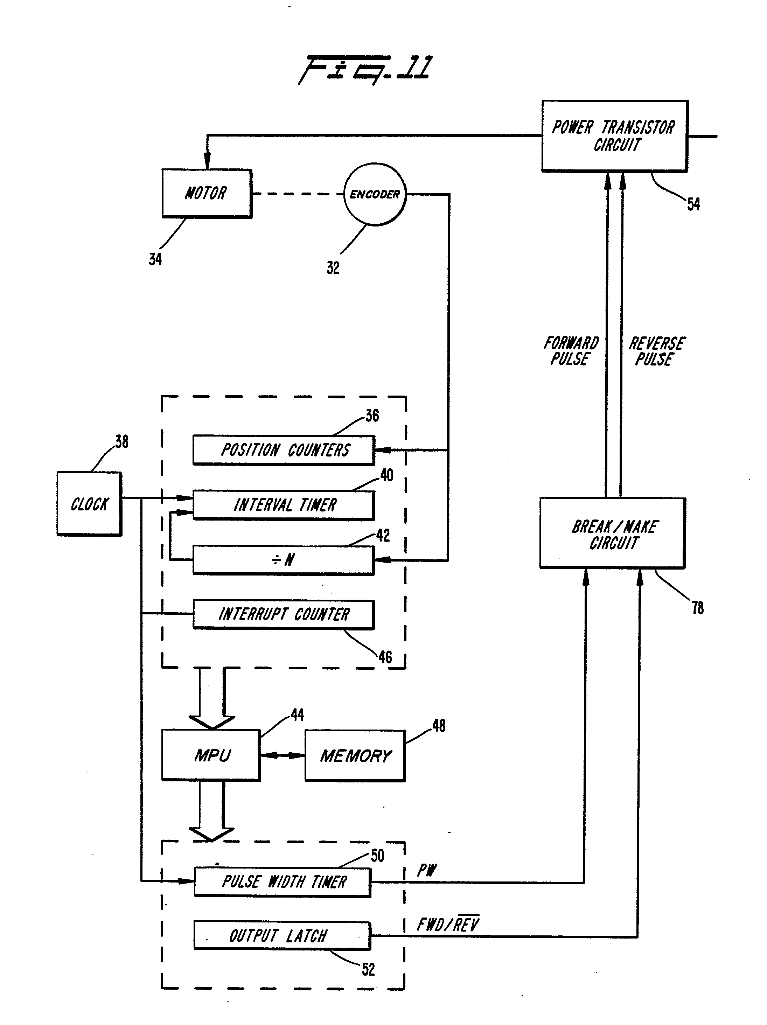

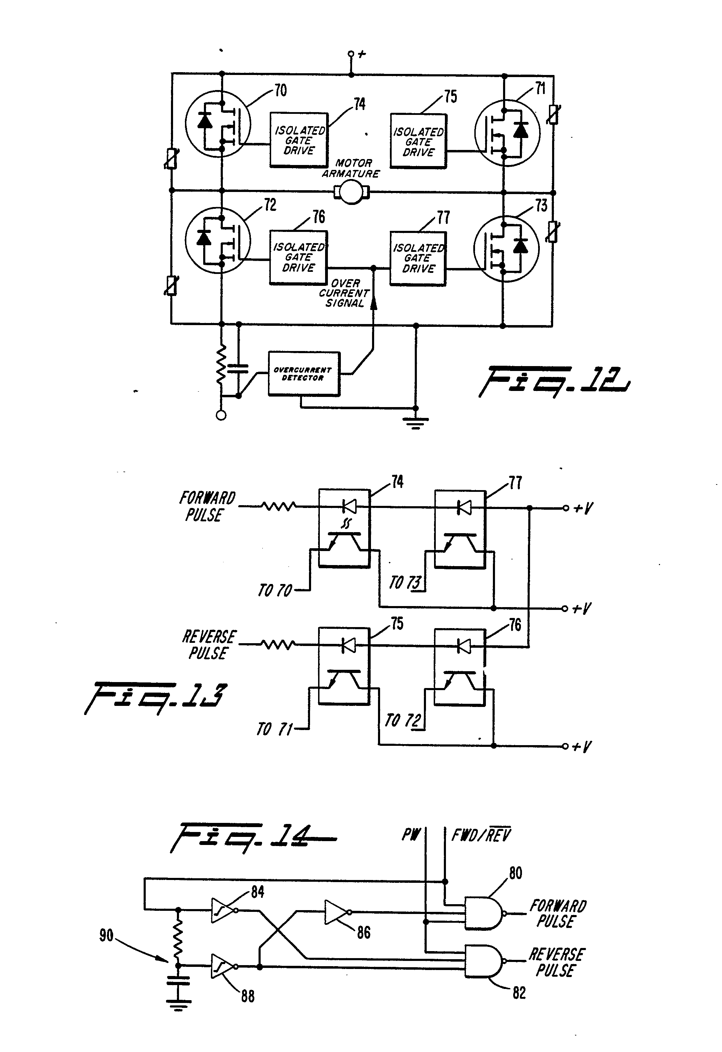

To facilitate an understanding of the digital control system of the present invention as applied to an electric motor, reference is first made to the graph shown in Figure 1. This figure shows velocity error (VE) plotted against position error (PE) to define an error plane, and provides insight into the interrelationship of these two errors in motor control.

Any motion imposed on a motor defines a continuous path in the error plane, and the objective of the servo control system is to keep the motor's path of motion close to the origin. In the graph of Figure 1, any point along the horizontal axis (X) represents zero velocity error. The state of a motor turning at the correct velocity can be represented as such a point. Any motor turning with a constant velocity error can be represented as a horizontal line (Y) above or below the horizontal axis. Constant acceleration of a motor can be represented as a parabola (Z) which is symetrical about the horizontal axis.

The basic need in a servo control system is to ensure that position errors do not accumulate; therefore, it is important that velocity error be kept near zero. However, if an absolute position error occurs, correction needs to be made, even if velocity error is zero. If the state of the motor at an instant in time is plotted on the error plane, then any attempt to return the motor state to the origin must consist of two operations, either (a) accelerate to a point which will allow deceleration to the origin, or (b) decelerate to a point which will allow acceleration to the origin.

Each combination of a position error and a velocity error defines a vector on the error plane which is indicative of the state of the system. Often, it is unambiguous what should be done based on errors that have accumulated. For example, at vector "A" on the graph of Figure 1 the motor is ahead of target and running too fast; therefore, it should be caused to decelerate until one of these error indicators changes sign. Similarly, action taken at vector "B" is relatively unambiguous. Since the motor is behind and too slow, power should be applied to accelerate the motor. A more difficult problem occurs when the motor state is at vector "C". Should the motor be accelerated because it is behind in position or decelerated because it is going too fast? The correct response is dependent on the actual response of the motor to a change in power. If reducing the power so as to decelerate the motor results in the motor state passing through the vertical axis, the motor should be decelerated. However, if the motor state would not cross the vertical axis, power should be sent to accelerate the motor. Similarly, at vector "D", the motor should be accelerated if the applied power will send the motor along a path that takes its state across the vertical axis and should be caused to decelerate otherwise.

A determination of whether the motor's response to a change in power will cause its state to cross the vertical axis is made with reference to the parabolic curves Z of Figure 1. More particularly, with reference to Figure 2, the pair of half-parabolas which respectively occupy the upper left and lower right quadrants of the error plane are utilized to provide a continuous function labelled a return function. The particular shapes of the half parabolas are defined by the equations $VE^2 = 2dPE$ for the left-hand curve and $VE^2 = 2aPE$ for the right-hand curve, where "a" represents the available acceleration that can be produced by the motor and "d" (which can be equal to "-a") represents the amount of available deceleration for the motor system.

In accordance with the present invention, the return function that is descriptive of the available acceleration and deceleration of the particular system is used as a threshold criterion for determining whether the motor should be accelerated or decelerated. Basically, the control system operates on the principle that if the state of the system is on one side of the return function, e.g. below it with reference to the vertical "VE" axis, power should be applied to accelerate the motor, and if the system state is on the other side of the function the motor should be decelerated, through the application of reduced power, no power, or reverse power. In other words, the first-order response of the system is to switch power between two discrete levels to thereby provide optimum response by utilizing the maximum pre-selected acceleration and deceleration to execute required corrections. Such an approach is far more responsive (i.e. it has greater dynamic stiffness) than linear systems which utilize proportional control to gradually change acceleration rates in response to increasing errors.

Basic System Operation

A representative flow chart depicting the general sequence of operations in one feedback cycle of a motor control system which operates in accordance with the foregoing criteria is depicted in Figure 3. After a return function has been chosen, the feedback cycle begins by reading actual position and velocity of the motor. A determination is then made of desired position and velocity based on pre-selected values stored in memory, and position error and velocity error are calculated based on a comparison of measured actual values and stored desired values. The system state defined by the position error and velocity error is compared to a stored return function to determine if the state is above the function. If the state is not above the return function then a pulse having a width sufficient to accelerate the motor is sent to the motor. If the system state is above the return function, then the motor is decelerated, for example by applying no power to the motor during the control cycle.

Each of these steps is explained in greater detail in the sections which follow.

Return Function

As a first step in the implementation of the invention, a return function must be defined for the system to be controlled. In theory, optimal return curves will be defined by available acceleration and deceleration rates equal to one half of the algebraic difference between motor acceleration when switched to high power and motor acceleration when switched to low power, i.e., the acceleration spread over the power band. Generally this spread will not change much regardless of external torque, acceleration requested by the desired path of motion or the velocity of operation. The exact procedure used to arrive at the available acceleration and deceleration will be well known to those skilled in the art once the steps which the system takes to achieve those accelerations and decelerations are understood. Also, the exact shape of return curves is not critical to satisfactory operation of the system.

More particularly, it is not essential that return curves be matched perfectly to the available acceleration and deceleration. If return curves are parabolic in shape but closer to the horizontal axis than the actual available accelerations would place them, the system will be more stable but response time will be lengthened. If the return curves are too far from the horizontal axis then the response time will be faster, but the system may tend to overshoot and oscillate. If return curves are not parabolic, their exact effect on performance will depend on their value relative to the parabola matching the available acceleration. For example, a straight line could be used. Although it would not provide an optimum criterion, it would be similar to that provided by a position and velocity compensated linear control system. If a linear return curve were considered, (for example because it could be implemented in analog hardware) and were used to provide a criteria for switching acceleration rather than gradually changing it as distance is increased from such a line, acceptable feedback performance for many applications would be expected. In summary, good performance from a switched power system of the type provided by the present invention is not critically dependent on the exact values used to define its return function.

Once the appropriate function is chosen, it is recorded or stored. Preferably, such storage is in the form of a look-up table where sequential memory locations correspond to sequential units of position error, i.e., points along the horizontal axis of the error plane. A value indicative of the VE value of the return function at the associated PE point is stored in each of these memory locations. Thus, each time that a position error is detected in the system, the detected error can be used as an address which points to a particular memory location. The stored velocity error at this location can be compared to the actual velocity error to determine whether the system state is above or below the return function.

Feedback Information

It is the nature of the feedback control system of the subject invention that it requires feedback information only at periodic intervals and that such information be representative of the system state at an instant in time, rather than on a continuous basis as is needed by an analog system. Consequently, once per control cycle one or more feedback elements are sampled to read the actual position and velocity of the motor. In a preferred embodiment, the position is determined at the instant in time at which the control cycle is initiated and the velocity is taken as the difference of such position readings between successive samples. Under certain operating conditions, however, it is preferred to time the interval between known events produced by the feedback element and use such time measure or its reciprocal to represent velocity directly.

One embodiment of a feedback element for producing accurate information with a high degree of resolution is illustrated in Figure 4a. An encoder disc 10 is fixed or otherwise coupled to the shaft 12 of the motor to be controlled and its speed is monitored by a sensor system including a fixed mask 13, a light source 14 and a detector 16. A second similar encoder disc 18 is also mounted on or coupled to the motor shaft 12. The optical tracks of the discs 10 and 18 are concentric with the axis of rotation of the shaft 12 in a well-known fashion. A second shaft 20, driven by a reference motor - (not shown), supports a second encoder disc 22 having two mutually concentric optical tracks. Monitoring of the speed of the reference shaft is carried out by a second sensor system having a fixed mask 23, a light source 24 and a detector 26.

Referring to Figure 4b, each of the detectors 16 and 26 produces a single logic level pulse for each increment of angular motion of the encoder discs 10 and 22 in a well known fashion. The frequency of the pulse train from the detector 16 is proportional to the speed of the shaft 12 which is the "absolute" speed of the servo system. The frequency of the pulse train from the detector 26 is proportional to the speed of the shaft 20 which is the speed of the "reference" motor.

The shafts 12 and 20 are coaxial and arranged to allow the encoder disks 18 and 22 to rotate face to face in close proximity such that their respective optical tracks are aligned around their entire circumference. A light source 28 and a detector 30 form a sensor system which is aligned to read through the optical tracks of both discs 18 and 22 simultaneously. If the encoder disc 18 is stationary (i.e., the servo is stationary), it will act as an ordinary optical mask for the encoder disc 22 in the same manner as the optical mask 23 and the detector 30 to produce a pulse train having a frequency exactly equal to the pulse train from the detector 26. However, if the servo moves then the disc 18 effectively forms a moving mask for the disc 22 and the detector 30 will produce a pulse train whose frequency is shifted relative to that of pulse train from the detector 26 by an amount equal to the frequency of the pulse train from the detector 16. The pulse train that is produced by the detector 30 is referred to as the vernier pulse train. It is preferable that the detector 30 have a field of view that covers a large enough number of slots in the discs 18 and 22 that variations in light intensity are due to the relative positions of the discs and are not associated with movement of the discs relative to the stationary detector. In a preferred embodiment the detectors 16, 26 and 30 are integrated "Photologic" (trademark of TRW Corp.) devices which produce a noise-immune logic level transition in the output signal when the amount of detected light crosses a threshold level.

It has been found that encoder discs with wider light blocking slots than transmissive slots in their optical tracks (preferably a ratio of about 60/40) make the system most tolerant of mechanical misalignment. In a preferred embodiment all optical tracks in the two discs 18 and 22 have equal numbers of slots per revolution.

It is not necessary, however, that the two associated optical tracks which produce the vernier pulse train be of the same diameter or that the reference and servo axes be concentric. In fact, one or both of the tracks could be linear. The encoder slots need only have approximately the same pitch and be in approximate alignment at the location of the sensor. The reference mask can even be made to oscillate rather than rotate, although extracting information from the resulting pulse trains may be somewhat more difficult.

With the system shown in Figure 4a, it is possible to detect changes in angular position to within a fraction of the space between two successive slots on the disk. Figure 5 is a geometrical representation of the pulse trains generated by the reference and vernier sensors 26 and 30 during one feedback control cycle. Reference characters W, X, Y and Z represent integer numbers of encoder slots as counted directly. Reference characters A through I represent the number of pulses from a high-speed clock that are counted in the respective illustrated intervals. These intervals can be determined with the use of counter timer circuits which monitor the encoder pulses and other events of interest, e.g. interrupt pulses which determine the feedback cycles, and record appropriate values by techniques which are well-known in the art. The interval counts are combined algebraically to resolve position to a fraction of an encoder slot at the instant in time represented by the dashed line at interrupt #2 as follows:

Position: reference $= X + D/C$

vernier $= Z + H/G$

Velocity can then be taken as the difference in the position at successive interrupts, represented algebraically as follows: Velocity: reference $= [-(X + D/C)-(W + B/A)]$

vernier $= [(Z + H/G)-(Y + F/E)]$

The absolute value of either position or velocity are then the difference between the vernier and the reference values determined above. Of course, other methods for determining velocity, such as timing the interval between successive encoder pulses, can be employed. Systems can be constructed without the need for a "hardware divide" by using such an interval count directly as a proxy of velocity.

This technique can be used to resolve position to .01 to .001 of a physical slot or better, depending on the number of encoder slots on the discs, length of the interrupt period, high speed clock frequency, accuracy of the encoders and speed of the reference motor. The interrupt period is preferred to be short enough to insure that changes in velocity during the period are less than the finest increment of velocity being resolved.

When the frequency of pulses from the absolute encoder disc 10 is high enough to produce 2 or 3 pulses per interrupt period or more, such pulses may be used directly in a manner similar to the above. When the speed of the servo motor is high enough to produce 8 or more pulses per interrupt period, it may be necessary to use the foregoing technique only for resolving position, and to time the interval between several full pulses and use its reciprocal in order to achieve the required resolution of velocity. Various other algebraic combinations of time intervals can be used to achieve the same result and will be apparent to those skilled in the art.

When switching between absolute and vernier derived feedback data, allowance must be made for a phase difference between the two sources of information. The exact method of constructing such a "handoff routine" will likewise be apparent to those skilled in the art.

Error Computations

Once the system has acquired information describing the actual position and velocity from the feedback element, the state of the system, i.e., its vector on the error plane, must be determined. The first step in such determination is to obtain values for desired position and velocity. Referring to Figure 6, each of the rectangular blocks shown therein can represent one byte (8 bits) of data. The first line of blocks represents four bytes of position data, the second line represents three bytes of velocity data, the third line represents three bytes of acceleration data, and the fourth line represents two bytes of jerk (defined as the time derivative of acceleration), as shown. Figure 6 illustrates - schematically an exemplary combination of data; the exact amount of data that is needed is specific to any particular embodiment of the control system.

Once each control cycle, the jerk term is added to the acceleration value, which is then added to the velocity term, which is finally added to the position data. The values for position and velocity so determined are numerically the desired values for position and velocity for that cycle. These desired values are subtracted from the measured values for actual posi tion and velocity to determine position error (PE) and velocity error (VE).

The desired path which is to be followed by the motor can be defined in terms of an arbitrarily long table of groups of values, with each group comprising a set of data necessary to fill the blocks shown in Figure 6. At least one additional piece of data can be used to indicate how many iterations of the control cycle would use a particular group before the next group is used. For example, a desired path can take the form of a table that could be made available to a control CPU in a number of ways. The table could be placed in the memory space of a control microprocessor prior to a feedback operation, could be accessed by direct memory access techniques using memory shared with a host system, down-loaded in real time from a host system, or generated in real time by a system which adapts to its environment.

Multiple axes can then be synchronized by individually following path tables which are each stepped at rates dictated by common control cycle interrupt pulses.

Conventional systems synchronize multiple axes by generating multiple pulse trains which are representative of the desired coordinated path of motion. The host system must retrieve values representative of the time interval between such pulses and send them to counters to be counted down in real time. This is a very heavy burden on the host system and is the limiting factor in the performance of some systems.

The all digital approach of the present invention can keep all desired path information entirely in software. No physical pulse train is ever needed and as a result much less computational power is needed by a host system. Furthermore, the generation of the information is velocity independent since the desired path is updated once per control cycle rather than once per physical pulse.

Once the position and velocity errors are determined from the desired and measured values, they are used to define the system vector which describes the state of the system on the error plane relative to the return function.

Power Control

In the control system of the present invention, two discrete voltage pulse values are established and selectively utilized to provide the appropriate response. One of these voltage pulses produces acceleration and the other causes deceleration of the motor. For example, the acceleration pulse could be positive and have a relatively long duration, and the deceleration pulse could be of the same polarity but of much shorter length, or it could be of opposite polarity or be no pulse at all. In dependence on whether the system state lies above or below the return function, one of the two available pulse values is applied to the motor during a feedback control cycle.

Thus it will be appreciated that the present invention provides a clamped, or discrete, response to errors. In other words, the maximum pre-selected response is utilized even for the minimum discernible error. This technique, which can be referred to as Digital Pulsed Voltage (DPV), is to be contrasted with conventional pulse width modulation techniques which provide a control response that is proportional to detected errors. The difference between these two approaches is best understood with reference to the voltage and current diagrams of Figures 7a and 7b. In a pulse-width modulated system, a desired reduction in motor speed, and hence motor current, causes a corresponding gradual change in the duty cycle of the voltage pulses that are applied during every feedback cycle. The interaction of this voltage reduction with the inductance of the motor causes the average current to drift down to the desired value over several cycles. In contrast, when a reduction of the motor current is required in a Digital Pulsed Voltage system, a large step-change in pulse duration, or even no voltage pulse, is sent during a particular feedback cycle. This type of operation enables the motor current to drop down to the desired value at a much faster rate, thereby achieving a quicker response. Although the pulse widths are changed drastically from one feedback cycle to the next, smooth motor operation is achieived as long as the frequency of the cycles is sufficiently high.

Figure 8 graphically illustrates the path followed by the motor state in the error plane during operation of the control system of the invention. Point 1 on the graph represents an actual instantaneous position error and velocity error. Since the vector defined by point 1 is above the return function, the motor will be decelerated, for example no power will be applied to the motor during the feedback cycle. In response, the system state will follow a parabolic path which is symmetrical about the horizontal "PE" axis, such as that depicted by the dashed line in Figure 8. This condition will be maintained during successive feedback cycles until point 2 is reached. At point 2 comparison with the return function indicates that the system state is below the function and accelerating power will be applied to the motor until point 3 is reached. The above sequences will be repeated through successive points, i.e. 4 and 5, until the origin point, i.e., desired position and velocity, is reached.

Non-Extinguishing Motor Current

Motor control systems can be classified as operating in one of two regimes: (1) that in which the motor current extinguishes during each feedback cycle, i.e. the motor current returns to zero before the next voltage pulse is applied, and (2) that in which it does not extinguish. The former type of operation is characteristic of motors which operate at relatively low power levels and have a motor electrical time constant (operating current times the inductance of its windings divided by its bus voltage) that is short relative to the length of a feedback cycle. If one or more of these parameters is changed, for example a high-inductance motor or a more frequent control cycle is used, the current may not return to zero during each cycle. In such a case, a slight modification to the response may be desirable in order to insure stable performance. When current does not extinguish during each cycle, longer width pulses that are sent in succession will cause current in the motor to build and shorter pulses will reduce current. The result is that successive pulses in either direction do more than just cause acceleration or deceleration. Successive pulses cause a change in the rate of acceleration or deceleration, i.e. jerk. A pulse having a width which is the average of those of the long and short pulses (called a center pulse) will, however, approximately maintain a constant acceleration or deceleration once the appro priate rate of acceleration (positive or negative) is established by a few long or short pulses.

In the non-extinguishing case, therefore, a few short pulses are sent to the motor just after its state crosses from below the return function, followed by center pulses until the return function is crossed from above. Then a few long pulses are sent followed by center pulses as the cycle repeats. The number of long or short pulses can be either a fixed number, typically 2 or 3, or could be based on measured change in acceleration or deceleration rates.

For example, with reference to Figure 9, when the system vector crosses from above to below the return function during feedback cycle 1, an acceleration (long) pulse is applied to the motor during the next cycle in order to force the vector back up toward the return function. These pulses continue to be applied during successive feedback cycles as long as the distance of the system vector from the return function continues to increase. In the example of Figure 9, this increase continues through feedback cycles 2-4. Once the distance begins to decrease, center pulses of a narrower width are applied to the motor during the following feedback cycles (cycles 5-8) until the vector crosses over the return function. Then, decelerating pulses (which could be no pulses) are applied during feedback cycles 9-11 as long as the distance of the system vector from the return function continues to increase, and then center pulses are applied (cycles 12-14). This operation continues, with accelerating or decelerating pulses being applied to the motor during the first few feedback cycles after the system vector crosses the return function and center pulses being applied at other times, as velocity and position errors are reduced in response to changing system demands.

In motor control applications involving very large desired acceleration rates and/or rates of change of acceleration (jerk), the conceputal framework and resulting control function may be extended to an error space in which position error, velocity error, and acceleration error form three mutually perpendicular axes in space. In three-dimensional space, any available jerk rate would define a return curve which is an easily definable line passing through the origin. Any motor motion which begins at an arbitrary point in three-dimensional space will traverse a path parallel to a return curve but not necessarily passing through the origin. With this conceptual framework, various methods of selecting pulse widths will be apparent. For instance, a measure of acceleration error (AE) can be used to keep the system in a small range of acceptable acceleration errors near the zero "AE" plane. Once inside such a range, a two-dimensional error plane and return curve criterion can be used to force the system toward zero position and velocity errors. A surface in three-dimensional space would define a criterion for causing acceleration to increase or decrease depending on whether the system would pass through the zero "AE" plane above or below the return curve in that plane.

In order to make three-dimensional space a useful construct, some reasonably accurate and up-to-date measure of acceleration is necessary. The second difference of position or first difference of velocity are potential sources of acceleration information. Motor current is a function of acceleration (the exact relationship depending on the type of motor) but the motor current is also affected by any external torque which the motor must drive. If the external torque is known, or changes slowly, then motor current can be correlated to acceleration in real time by keeping rolling averages of both motor current and position differences over many control cycles. The ratio of these rolling averages is the motor current to acceleration ratio for the external torque being experienced. The instantaneous acceleration based on that ratio is proportional to the instantaneous current. The current can be measured by placing a resistor having a small ohmic value, with its small inherent inductance being shunted by a suitable capacitor, in series with the motor and measuring the voltage drop across the resistor. The voltage obtained can be converted to digital form with an analog to digital converter in a well known fashion. Any drift in the series resistor or convertor, or nonlinearity in current acceleration relationship for the motor, is taken into account in the real time correlation described above.

Dynamic Pulse Length Variation

In a simple form of the invention, the length of each preselected pulse that can be sent to the motor is not changed, and thus the only variable, i.e. the first-order response, is which one of the accelerating pulse, decelerating pulse or center pulse (where applicable) is to be sent during each feedback cycle of operation. As a second-order response of the invention, the width of these pulses can be dynamically varied in accordance with the detected state of the system to bring the system to the desired state at a faster rate. In this mode of operation, a nominal pulse width can be stored for each type of pulse, and one of these stored values is applied during each feedback cycle. For each cycle during which the system state lies below the return function, the stored values of the pulse widths can be incremented by a suitable amount. With reference to the example of Figure 9, the stored values for the pulse widths would be increased during each of feedback cycles 2-8. Conversely, when the system state lies above the return function (during feedback cycles 9-14) the pulse width values are decremented. This operation will increase the length of pulses with increasing torque and shorten them with decreasing torque, allowing precise and stable response to rapidly changing loads.

A third-order response is also possible in which the difference between the long and short pulse, i.e. the power band, is adjusted. A large difference between long and short pulse lengths results in the best dynamic response to changing loads, but a smaller difference results in smaller acceleration and deceleration and, therefore, somewhat smoother operation. A smaller power band results in flatter or more horizontal paths being followed by the motor state on the error plane, with the result that more pulses occur between return function crossings. A criterion such as the occurrence of a number of successive pulses above or below the return function can be used to modify the difference between long and short pulses.

The second-and third-order response can thus be envisioned in terms of a center pulse being varied dynamically and the long and short pulses having a variable relationship to the center pulse, respectively.

A fourth order correction is possible which would vary the bus voltage, for example by means of phase angle control of an SCR bridge or a pulse width modulated bridge feeding bus storage capacitors. This would offer another trade-off between response time and smoothness.

A more comprehensive flow chart of a feedback control cycle, which includes the use of center pulses and the second-order dynamic pulse variation, is shown in Figure 10. In the control system represented in Figure 10, the criterion for sending a center pulse is whether three consecutive accelerate or decelerate pulses have been applied to the motor. Accordingly, after actual position and velocity have been measured, desired values for position and velocity generated, position error and velocity error computed, and the state of the motor relative to the return function determined (as in Figure 3), the results of previous feedback cycles are examined to determine whether a center pulse is to be sent. For example, during the first feedback cycle after the system vector crosses from below to above the return function, a NOCNT value, indicative of the number of successive cycles during which the vector lies below the function, is set to zero. In addition, a flag (NOFLAG) which indicates whether NOCNT is greater than three, is cleared. A determination is then made whether another flag (YESFLAG) is set. During the first cycle the flag will not be set, and a YESCNT value (which was previously set to zero) is incremented by one. Since the YESCNT value is less than or equal to three, a decelerating pulse - (LOPULSE) will be applied to the motor. The width of this pulse is defined as the stored value for a center pulse minus an offset value equal to one-half the desired power band. After the decelerating pulse is applied to the motor, the stored value for the center pulse is decremented by an appropriate value.

This operation continues for two more feedback cycles, assuming the system vector remains above the return function, with successively shorter decelerating pulses being applied to the motor. During the next (fourth) cycle, if the system vector is still above the return function, the YESFLAG will be set and a center pulse, rather than a decelerating pulse, is applied to the motor. Successively shorter center pulses will continue to be applied to the motor as long as the system vector remains above the return function.

Once the system state crosses the return function, a similar type of operation is carried out except that an accelerating pulse (HIPULSE) is sent during the first three feedback cycles. In addition, the widths of the pulses are successively incremented rather than decremented.

Control Circuit

A system which operates in accordance with the foregoing principles is illustrated in block diagram form in Figure 11. Referring thereto, actual motor position and velocity are obtained from a feedback element 32 attached to a motor 34. The feedback element can be any device for generating a pulse for each incremental unit of movement of the motor, such as a slotted disc optical encoder, a Hall-effect sensor, a laser disc encoder, or a Time Vernier of the type shown in Figure 4a. The pulses from the feedback element are directly fed to digital counters 36 where they are counted to provide position information. To obtain a velocity measurement and/or fractional slot information, a high speed clock 38 is counted in timers 40 during the time required for some number (N) of pulses to be generated, as determined by a counter 42, or between other events of interest as explained with reference to Figure 5.

A microprocessor 44 receives interrupt pulses at a regular frequency from an interrupt counter 46, and in response thereto samples the position counters 36 and the timers 40. The position and velocity-related values are compared with desired position and velocity, which are computed from values stored in a memory 48, to calculate position and velocity errors. On the basis of this calculation a determination is made whether the system state is above or below the return function stored in the memory 48. In response thereto, a pulse of appropriate width and polarity is selected and applied to the motor.

More particularly, registers in the memory 48 can be respectively loaded with the pulse widths for the accelerate and decelerate pulses, as well as the center pulses when appropriate, all of which are incremented or decremented during each cycle as explained previously. In response to a determination during each cycle as to whether the system state lies above or below the return function, one of these stored values is selected and sent to a pulse width timer 50 to cause it to produce an actuating signal PW of appropriate duration. At the same time, the proper polarity for the actuating pulse is chosen and fed to a latch circuit 52, which produces a forward/reverse output signal. These two signals, PW and FWD/ $\overline{REV}$ , are logically combined to form a forward pulse or a reverse pulse signal that actuates an appropriate pair of the power transistors in a power circuit 54.

A power transistor circuit for controlling the motor in response to these signals is schematically illustrated in Figures 12-13. Referring to Figure 12, the terminals of the motor arma ture are respectively connected to the junctions of two series connected power transistors 70-71 or 72-73. The two transistors in each pair of diagonally opposed transistors 70, 73 and 71, 72 are driven together. When transistors 70 and 73 are actuated, the motor is driven in the forward direction, and when transistors 71 and 72 are actuated the motor is driven in the reverse direction, in a well-known fashion.

The gate electrodes of the transistors are actuated by means of isolated gate drive circuits 74-77. These gate drive circuits can be optically isolated, as shown in Figure 13. The drive circuits 74 and 77 for the transistors 70 and 73 are connected in series and simultaneously actuated in response to the forward pulse. Similarly, the drive circuits 75 and 76 for the power transistors 71 and 72 are connected in series and simultaneously actuated by the reverse pulse.

To ensure that the transistors of one pair completely turn off before those of the other pair turn on when switching from power of one polarity to that of the other, and thereby avoid short circuits, the logical combination of the PW and FWD/ $\overline{REV}$ signals preferably takes place in a break-before-make circuit 78. An example of such a circuit is shown in Figure 14. This circuit includes two three-input NAND gates 80 and 82. The pulse width modulated signal PW from the pulse width timer 50 provides one input signal to each NAND gate. The FWD/ $\overline{REV}$ signal provides another input signal directly to one of the NAND gates 80, and is inverted in an inverter 84 to provide a second input signal to the other NAND-gate 82. The other inverters 86 and 88, in combination with an R-C delay circuit 90 are provided to give a sufficient delay for the third input signal to the NAND gates. More particularly, the delayed FWD/ $\overline{REV}$ signal from the R-C circuit 90 is inverted and Schmitt-triggered in the inverter 88 and applied to the NAND-gate 82. This signal is re-inverted in the inverter 86 and applied to the NAND-gate 80. In operation, whenever the FWD/ $\overline{REV}$ signal from the output latch 52 changes state, the NAND-gate 80 or 82 which was actuated will immediately turn off, whereas the other NAND gate will not be actuated until the end of the time period determined by the R-C delay circuit 90.

It will be appreciated that the counting, timing and other logic functions that are carried out in the circuitry described above could be implemented in a variety of manners, including a custom integrated circuit.

In summary, the Digital Pulsed Voltage control system of the present invention provides a clamped, or switched, response to detected position and/or velocity errors, in which the maximum available correcting power is applied to the motor in dependence upon the state of the system relative to the return function. Such an approach to servo control provides a significantly faster response time than conventional systems which employ a proportional type of control function. Further, when utilized in conjunction with a Time Vernier encoder, a servo can be accurately controlled over its entire velocity range.

While the four-transistor "H" bridge arrangement of Figure 12 is conventionally employed in connection with wound armature, mechanically commutated DC motors, the practical application of the present invention are not so limited. Rather, the inventive concepts can also be applied to AC and brushless DC servo motors with little modification of the specific embodiments disclosed herein.

The advantages of AC motors are lack of sliding brushes, increased mechanical reliability, and generally higher performance from a given frame size. However, more transistors are required in the power circuits and the torque ripple, which is a function of rotor angle, is many times greater than in standard DC motors. The torque ripple is generally about 15% in a 3-phase motor which requires 6 transistors and about 5% in 6-phase motors requiring 12 transistors.

In the 3-phase case, the first-order response of the present invention will handle the 15% torque variation with essentially no performance degradation in almost any imaginable implementation of the system. Generally, the second-order response will automatically follow torque variations and performance will be satisfactory. The second-order response can be biased with values corresponding to expected torque variations corresponding to rotor angle. Such feed forward might be useful in some applications. Since torque variations decrease with increasing number of phases, more phases might be preferable. However, with the increased cost of the drive due to more transistors and more complicated commutation sequencing, more than 3 phases are not generally justified. Proper commutation sequences to achieve 4 quadrant operation are well known to those versed in this technology. As with the "H" bridge circuit, transistors are fired in pairs and break-before-make circuitry can be utilized to avoid short circuits.

In the foregoing description of the invention the primary controlled parameter is the width of a power pulse that is applied to the motor. However, it will be appreciated that the basis concepts which underly the invention are equally applicable to the control of other parameters. For example, the determination of whether the system state is above or below the return function can be used to switch between two different power supplies, in which case the accelerating power would have one amplitude and the decelerating power would have a different amplitude and/or polarity. The second-order response could then be an incremental adjustment of these two voltage levels.

Furthermore, as noted previously the principles of the non-linear control system of the present invention are not limited to the control of electric motors. For example, magnetically balanced scales require a control system that is similar to that required for electric motors. Automotive cruise control systems might benefit from the low cost, reliability, stability and zero following error offered by the invention. Similarly, military equipment such as aircraft flight control systems could utilize the invention's operating principles.

**Claims**

1. A method for controlling the speed and angular position of an electric motor comprising the steps of:

determining a return function which defines the response of the motor to a change in power or load, said return function being based on the formula $VE^2 = 2aPE$, where "VE" is the difference between actual velocity and a desired velocity, "PE" is the difference between actual position and a desired position and "a" is the available acceleration and deceleration minus desired acceleration of the motor,

measuring the velocity and position of the motor,

determining VE and PE from said measurement,

determining a vector which defines the state of the motor as a function of both VE and PE and comparing said vector with the return function,

increasing the rate of acceleration of the motor when said vector is on one side of the return function, and

decreasing the rate of acceleration of the motor when said vector is on the other side of the return function.

2. A method as claimed in Claim 1, wherein power is applied to the motor in pulses and increased acceleration of the motor is effected by applying a first pulse having a preselected width and polarity to the motor and decreased acceleration is effected by applying a second pulse which differs from said first pulse in at least one of width and polarity.

3. A method as claimed in Claim 2, further including the steps of incrementing the preselected widths for at least one of said first and second pulses by a predetermined amount when the acceleration of the motor is increased and decrementing the preselected width for said one pulse by the predetermined amount when the acceleration of the motor is decreased.

4. A method as claimed in Claim 3, wherein the widths of both pulses are incremented and decremented.

5. A method as claimed in claim 1, wherein said increasing and decreasing steps include the steps of establishing first and second power values and selectively applying to the motor an amount of power that is determined by one of said first and second values in dependence upon whether said vector is on one side or the other of the return function.

6. A method as claimed in claim 5, further including the steps of incrementing said first and second values when the acceleration of the motor is increased and decrementing said values when the acceleration of the motor is decreased.

7. A method as claimed in any one of Claims 1 to 6, wherein the velocity of the motor is measured by measuring the velocity of a reference rotating shaft, measuring the difference in velocity between the motor and said reference shaft, and substracting said measured velocities from one another.

8. A digital pulsed voltage method for controlling a motor, comprising the steps of:

establishing a first voltage pulse value which, when applied to the motor, causes the rate of accelera-

tion of the motor to increase; establishing a second voltage pulse value which, when applied to the motor, causes the rate of acceleration of the motor to decrease; measuring the instantaneous position and velocity of the motor during each of a plurality of successive feedback cycles; and selectively applying one of two voltage pulses, corresponding to said first and second voltage pulse values, respectively, to the motor during each feedback cycle in dependence upon the relationship of the measured position and velocity to desired values for position and velocity.

9. A method as claimed in Claim 8, wherein said step of selectively applying a pulse includes the steps of determining a system vector which is a function of the differences between measured and desired values for both position and velocity, comparing said vector to a predetermined response function, and selecting one of said pulse values in dependence upon whether said vector is greater or less than said response function.

10. A method as claimed in Claim 9, wherein said response function is at least partially defined by the curves $VE^2 = 2aPE$ where "VE" is a difference between desired and measured velocities, "PE" is a difference between desired and measured positions, and "a" is the available acceleration and deceleration minus the desired acceleration of the motor.

11. A method as claimed in Claim 8, wherein the desired values for position and velocity are determined by storing a value for each of the desired position, velocity and acceleration of the motor at a predetermined instant, and adding the acceleration value to the velocity value and the velocity value to the position value during each feedback cycle.

12. A method as claimed in Claim 11, further including storing a desired jerk value and adding the jerk value to the acceleration value during each cycle.

13. A method as claimed in Claim 8, further including measuring the acceleration of the motor during each feedback cycle and applying one of said voltage pulses in dependence upon the relationship of measured position, velocity and acceleration to desired values for position, velocity and acceleration, respectively.

14. A method as claimed in Claim 8, comprising

establishing a third voltage pulse value intermediate said first and second voltage pulse values which causes the motor to maintain its existing acceleration, and

selectively applying one of three voltage pulses corresponding respectively to said first, second and third voltage pulse values to the motor during each feedback cycle in dependent upon the relationship of the measured position and velocity to desired values for position and velocity.

15. A method as claimed in Claim 8 or Claim 14, further including modifying at least one of said voltage pulse values during each feedback cycle in response to said relationship.

16. A method as claimed in Claim 14, wherein said step of selectively applying a pulse includes the steps of determining a system vector which is a function of the differences between measured and desired values for both position and velocity, comparing said vector to a predetermined threshold function, applying a voltage pulse corresponding to said first pulse value to the motor when said vector crosses from one side of the function to the other, and applying a voltage pulse corresponding to said second pulse value to the motor when said vector crosses from said other side to said one side of the function.

17. A method as claimed in Claim 16, further including applying a voltage pulse corresponding to said third pulse value of the motor when the distance of the vector from the function begins to decrease.

18. A method as claimed in Claim 16, wherein said response function is at least partially defined by the curves $VE^2 = 2aPE$ where "VE" is a difference between desired and measured velocities, "PE" is a difference between desired and measured positions, and "a" is the available acceleration and deceleration of the motor.

19. A method of determining the velocity of a first member comprising the steps of moving a second reference member relative to said first member, providing a first signal indicative of the velocity of said second member, providing a second signal indicative of the difference in velocities between said first and second members, and subtracting said first signal from said second signal to obtain a signal indicative of the velocity of said first member.

20. A method as claimed in Claim 19, wherein said first signal is a first pulse train having a frequency related to the velocity of the second member and said second signal is a second pulse train having a frequency related to said difference, and further including the process of determining instantaneous position to a fraction of a unit of position represented by one cycle of said pulse trains at an event of interest, comprising the steps of measuring the lapse of time between the start of the most recent pulse in said first pulse train and the event of interest; dividing the measured time by the period of the first pulse train to obtain a fractional value; adding the fractional value to the number of pulses in the first pulse train since the previous event of interest to obtain a first position value; performing similar steps with respect to the second pulse train to obtain a second position value; and subtracting one of said position values from the other to obtain an absolute position value.

21. A method for determining the direction of rotation of a movable member without error due to oscillations of the member about zero velocity, comprising the steps of rotating a reference element at a velocity which is substantially constant and independent of the velocity of said movable member, generating a first pulse train having a frequency related to the velocity of said reference element, generating a second pulse train having a frequency related to the relative velocities of said member and said element, and determining whether the frequency of said second pulse train is greater than that of said first pulse train.

22. A servo system for controlling the position and velocity of a controlled element (34), comprising:

means (32) for measuring each of the position and the velocity of the controlled element (34);

means (MPU) for comparing the measured position and the measured velocity with desired values for position and velocity, respectively, to generate a vector which is a function of both velocity error and position error and which is indicative of the actual state of the system relative to a desired state for the system;

means (50, 52) for determining the relationship of said vector to a threshold level which defines a perdetermined relationship between velocity errors and position errors for the element, and for producing an output signal indicative of whether said vector is on one side or the other of said threshold level; and

means (54) responsive to said output signal for increasing the acceleration of the controlled element when said vector is on said one side of said threshold level and for decreasing the acceleration of the element when said vector is on said other side of said threshold level.

23. A system as claimed in Claim 22, wherein said threshold level is a non-linear function.

24. A system as claimed in Claim 23, wherein said threshold level is based on the relationship $VE^2 = 2aPE$ where "VE" is velocity error, "PE" is position error, and "a" is the available acceleration and deceleration minus the desired acceleration of the controlled element.

25. A system as claimed in any one of Claims 22 to 24, wherein said controlled element is an electric motor (34) and said output signal responsive means (54) applies a first predetermined voltage pulse to increase the rate of acceleration of the motor (34) and a second predetermined voltage pulse to decrease the rate of acceleration of the motor (34).

26. A system as claimed in Claim 25, further including means (50, 52) for modifying the value of at least one of said voltage pulses in response to whether said vector is on one side or the other of said threshold level.

27. A system as claimed in Claim 22, further including means for measuring the acceleration of the element and means for comparing the measured acceleration with desired acceleration, and wherein said vector is a three-dimensional function of acceleration error, velocity error and position error and said threshold level defines a predetermined relationship of acceleration errors, velocity errors and position errors in a three-dimensional error space.

28. An apparatus for determining the velocity of a moving member (12) comprising:

a movable reference member (20),

means (23, 24, 26) for providing a first signal indicative of the velocity of said reference member (20),

means (18, 22, 28, 30) for providing a second signal representing the difference in velocities between the moving and reference members (12, 20), and

means for indicating the algebraic difference between said first and second signals whereby said algebraic difference is representative of the speed of said moving member.

29. An apparatus as claimed in Claim 28, wherein said moving member (12) is a rotating shaft of an electric motor.

30. An apparatus as claimed in Claim 29, wherein said reference member (20) is a second rotating shaft in axial alignment with said motor shaft (12).

Fig. 1

Fig. 2

Fig.3

STORE RETURN FUNCTION

MEASURE POSITION & VELOCITY

DETERMINE PE AND VE

ABOVE RETURN FUNCTION

YES

NO

DECELERATE MOTOR

ACCELERATE MOTOR

**Fig.4-a**

**Fig.4-b**

**Fig. 5**

POSITION
VELOCITY
ACCELERATION
JERK

*Fig. 6*

a)

VOLTAGE

FEEDBACK
CYCLE

CURRENT

PULSE WIDTH MODULATION

*Fig. 7*

b)

VOLTAGE

CURRENT

DIGITAL PULSED VOLTAGE

0 200 314

# Fig.8

RETURN FUNCTION

RETURN FUNCTION .

# Fig. 9

Fig.10

0 200 314

# Fig.11

POWER TRANSISTOR CIRCUIT — 54

MOTOR — 34

ENCODER — 32

FORWARD PULSE    REVERSE PULSE

POSITION COUNTERS — 36

CLOCK — 38

INTERVAL TIMER — 40

÷ N — 42

INTERRUPT COUNTER — 46

BREAK / MAKE CIRCUIT — 78

MPU — 44    MEMORY — 48

PULSE WIDTH TIMER — 50    PW

OUTPUT LATCH — 52    FWD/REV

ISOLATED GATE DRIVE 74

ISOLATED GATE DRIVE 75

MOTOR ARMATURE

ISOLATED GATE DRIVE 76

ISOLATED GATE DRIVE 77

OVER CURRENT SIGNAL

OVERCURRENT DETECTOR

*Fig.12*

FORWARD PULSE

74        77        +V

TO 70     TO 73     +V

REVERSE PULSE

75        76

*Fig.13*

TO 71     TO 72

+V

*Fig.14*

PW    FWD/REV

84

86

90

88

80    FORWARD PULSE

82    REVERSE PULSE